# EUROPÄISCHE PATENTSCHRIFT

(11) **EP 3 214 234 B1**
(45) Veröffentlichungstag und Bekanntmachung des Hinweises auf die Patenterteilung: **29.01.2020**
(21) Anmeldenummer: 16000532.8
(22) Anmeldetag: 05.03.2016
(51) Int. Cl.: E04B 1/04, E04B 1/41, F16B 5/02, F16B 43/00

(54) **FERTIGTEILVERBINDER UND VERBINDUNGSSYSTEM ZUM VERBINDEN VON BETONFERTIGTEILEN**
PREFABRICATED PARTS CONNECTOR AND CONNECTION SYSTEM FOR CONNECTING PREFABRICATED CONCRETE PARTS
CONNECTEUR POUR ÉLÉMENTS PRÉFABRIQUÉS ET SYSTEME DE CONNECTION POUR ÉLÉMENTS PRÉFABRIQUÉS EN BÉTON

(43) Veröffentlichungstag der Anmeldung: 06.09.2017
(73) Patentinhaber: HALFEN GmbH, 40764 Langenfeld (DE)
(72) Erfinder: Morsink, Richard, 7534 PX Enschede (NL); Albartus, Dirk, 44795 Bochum (DE); Garke, Robert, 99096 Erfurt (DE); van de Schoor, Paulus, 51147 Köln (DE); Heidolf, Thorsten, 99425 Weimar (DE)
(74) Vertreter: Reinhardt, Annette

(56) Entgegenhaltungen:
- DE-A1- 2 219 185
- DE-B- 1 096 583
- GB-A- 409 318
- US-A- 3 615 110
- US-A1- 2011 076 110
- US-A1- 2012 167 517
- US-A1- 2014 020 321
- US-B1- 6 213 679

## Beschreibung

Die Erfindung betrifft ein Verbindungssystem zum Verbinden eines ersten Betonfertigteils mit einem zweiten Betonfertigteil nach dem Oberbegriff des Anspruchs 1.

Bauwerke werden verbreitet aus Betonfertigteilen aufgebaut, die vor Ort durch geeignete Verbindungssysteme miteinander verbunden werden. Solche im Stand der Technik bekannten Verbindungssysteme greifen auf Fertigteilverbinder zurück, die in geeigneter Anzahl und Positionierung bei der Herstellung des jeweiligen Betonfertigteils darin eingegossen werden. Später bei der Montage vor Ort dienen sie der Aufnahme von geeigneten Verbindungselementen. Diese werden vor Ort eingesetzt und festgezogen, wodurch die Betonfertigteile miteinander verbunden werden.

Ein derartiges Verbindungssystem ist beispielsweise aus der DE-OS 26 23 803 bekannt. Das dort gezeigte Verbindungssystem beinhaltet ein Paar von Fertigteilverbindern, wobei je ein solcher Fertigteilverbinder in die aneinander angrenzenden Kantenbereiche zweier Betonfertigteile eingegossen wird. Der jeweilige Fertigteilverbinder umfasst eine Basisplatte mit zwei etwa senkrecht darauf aufgeschweißten Eingießankern, wobei die Eingießanker vollständig und die Basisplatte nur in ihren an die Eingießanker angrenzenden Bereichen in das Betonmaterial eingegossen sind. In ihrem Mittenbereich weist die Basisplatte eine Durchstecköffnung für ein Verbindungselement auf. Der zugehörige Bereich des Fertigteilverbinders liegt unter Verzicht auf einen Betonverguss frei, so dass das Verbindungselement eingesteckt und mittels einer 90°-Drehung vergleichbar zu einem Bajonettverschluss verriegelt werden kann. Als Abschluss des Montagevorgangs wird ein an den Außenflächen verzahnter und im Übrigen konischer Spannkeil eingetrieben, der einerseits eine Rückdrehung und damit ein Lösen des Verbindungselementes verhindert, und der andererseits die beiden Betonfertigteile gegeneinander axial verspannt. Auftretende Betriebslasten werden durch die vorgenannten Eingießanker in die beiden Betonfertigteile eingeleitet.

Obgleich sich eine solche Art der Verbindung zumindest im Prinzip bewährt hat, haben sich doch einige Aspekte als nachteilig herausgestellt. So setzt das vorgenannte Verbindungssystem voraus, dass an jeder Verbindungsstelle ein Paar von insgesamt zwei Fertigteilverbindern eingegossen werden muss, was entsprechende Kosten nach sich zieht. Die hohen Betriebskräfte müssen zuverlässig vom Verbindungselement in die Basisplatte und von dort über die Eingießanker in das Betonmaterial des jeweiligen Betonfertigteils eingeleitet werden. Es muss deshalb besonderes Augenmerk auf eine tragfähige Schweißverbindung zwischen der Basisplatte und den Eingießankern gelegt werden. Außerdem müssen die Eingießanker nicht nur bezüglich ihrer eigenen Tragfähigkeit, sondern auch bezüglich einer zuverlässigen Kraftüberleitung in das Betonmaterial geformt und dimensioniert werden. Dies geht mit einem unerwünscht hohen Aufwand einher und erfordert außerdem einen großen Bauraum, der nicht immer ohne weiteres bereitgestellt werden kann. Damit im Stand der Technik die Verspannung vorgenommen werden kann, müssen die beiden zu verbindenden Betonfertigteile exakt gegeneinander ausgerichtet werden. Eine solche exakte Lageausrichtung und deren Beibehaltung insbesondere vor und bei dem Verspannvorgang, aber auch der verspannten Bauteile gegeneinander, sind nur schwierig und mit großem Aufwand herbeizuführen.

Aus der US 3,615,110 A, der US 6,213,679 B1, der DE 1 096 583 A und der GB 409,318 A sind Verbindungselemente in Form von einstückigen Blechbiegeteilen mit Basisplatte, Öffnungen und abgewinkelten Blechabschnitten bekannt. Die US 2012/0167517 A1 offenbart einen aus Blech geformten Fertigteilverbinder, dessen Mittenabschnitt zum Eingießen in Beton vorgesehen ist.

Der Erfindung liegt die Aufgabe zugrunde, ein Verbindungssystem zum Verbinden von Betonfertigteilen anzugeben, welches neben einer verbesserten Krafteinleitung auch eine zuverlässige Lagepositionierung der beiden Betonfertigteile gegeneinander ermöglicht.

Diese Aufgabe wird durch ein Verbindungssystem mit den Merkmalen des Anspruchs 1 gelöst.

Nach der Erfindung ist vorgesehen, dass die Basisplatte und der mindestens eine bzw. die mehreren Eingießanker als einstückiges Blechbiegeteil ausgebildet sind, wobei mindestens ein Eingießanker gegenüber der Basisplatte aus deren Basisebene heraus um einen Winkel aufgebogen ist. Es wird also auf Schweißnähte verzichtet, so dass die ursprüngliche Tragfähigkeit des verwendeten Blechmaterials voll ausgeschöpft werden kann. Durch geeignete Biegeradien werden Spannungsspitzen vermieden. Zwischen den Eingießankern und dem umgebenden Beton kann ein besserer Formverbund hergestellt werden. Durch Teilflächenpressung und Hinterschnittwirkung kann eine erhöhte Verankerungswirkung im Beton erzielt werden. Die solchermaßen erhöhte Tragfähigkeit lässt den Einsatz von kürzeren Eingießankern zu, was den Platzbedarf verringert.

Es kann ausreichen, nur an einer Kante der Basisplatte einen oder mehrere Eingießanker anzuordnen. In einer vorteilhaften Weiterbildung der Erfindung grenzt an zwei sich gegenüberliegenden Kanten der Basisplatte jeweils mindestens ein Eingießanker an. Insbesondere sind die beiden genannten Eingießanker spiegelsymmetrisch zu einer Symmetrieebene des Fertigteilverbinders angeordnet. Hierdurch wird vergleichbar zu einer zweischnittigen Verbindung eine symmetrische Krafteinleitung in die Basisplatte herbeigeführt, was zur Entlastung der Konstruktion beiträgt. Alternativ oder in Kombination damit kann es zweckmäßig sein, dass an zumindest zwei und insbesondere an drei Kanten, welche über Eck zueinander benachbart sind, jeweils mindestens ein Eingießanker angrenzt. Hierdurch sind weitere Möglichkeiten zur geometrischen Anpassung an den jeweiligen Einsatzfall geschaffen. Beispielsweise können derartige Ausgestaltungen für Eckverbindungen von Betonfertigteilen zweckmäßig sein. Außerdem kann die Tragfähigkeit gesteigert werden.

Die Ausgestaltung des Fertigteilverbinders als Blechbiegeteil ermöglicht vielfältige Formanpassungen an den jeweiligen Anwendungsfall. In einer bevorzugten Ausführungsform ist zumindest ein Eingießanker als Rahmenelement ausgebildet, welches insbesondere zusammen mit der Basisplatte einen geschlossenen umlaufenden Rahmen bildet. Bei geringem Materialeinsatz erzeugt der genannte Rahmen eine hohe Verankerungswirkung im Beton. Außerdem erlaubt die Rahmenform eine Schachtelung mit weiteren Ankerelementen in der Blechebene, so dass das zur Verfügung stehende Blechmaterial optimal ausgenutzt werden kann. Alternativ oder zusätzlich kann es zweckmäßig sein, dass zumindest ein Eingießanker als Streifenelement mit einem Längsträger und mit einem Querbalken ausgebildet ist. Die Verankerungswirkung auch dieser Bauform hat sich als besonders ausgeprägt herausgestellt. Außerdem können Rahmenelement und Streifenelement im Blechmaterial ineinander geschachtelt positioniert werden, so dass unter voller Ausnutzung der Verankerungswirkung nur wenig Blechmaterial und ein nur geringer Bauraum erforderlich sind.

Solche oder andere Formen von Eingießankern, welche in einem auf die Basisebene abgewickelten Zustand ineinander geschachtelt sind, werden in einem vorteilhaften Aspekt der Erfindung relativ zur Basisplatte aus deren Basisebene heraus in unterschiedlichen Winkeln aufgebogen. Einerseits begünstigt dies eine über das Volumen des angrenzenden Betons verteilte Krafteinleitung. Andererseits lassen sich so gezielt optimierte Richtungen der Krafteinleitung herbeiführen, um bestimmte Lastfälle bzw. kombinierte Lastrichtungen optimiert aufnehmen zu können.

Gemäß der Erfindung umfasst das Verbindungssystem einen der hier beschriebenen erfindungsgemäßen Fertigteilverbinder sowie ein zugehöriges Verbindungselement, wobei der Querschnitt der Durchstecköffnung in der Basisplatte größer ist als der Querschnitt des Verbindungselements. Außerdem weist das Verbindungssystem Positioniermittel zur freien Positionierung und zur formschlüssigen Lagefixierung des durch die Durchstecköffnung hindurchgeführten Verbindungselementes in der Basisebene der Basisplatte auf. Dies erlaubt eine exakte Relativpositionierung vor und während des Verbindungsvorganges, wobei nach festgezogener Verbindung eine entsprechende formschlüssige Lagefixierung der beiden Betonfertigteile nebeneinander zuverlässig aufrechterhalten wird.

Für die Ausgestaltung der formschlüssigen Lagefixierung kommen verschiedene Möglichkeiten in Betracht. In einer ersten bevorzugten Ausgestaltung umfassen die genannten Positioniermittel zumindest einen ersten Exzenterring, welcher relativ zur Basisplatte mit der Durchstecköffnung um eine Drehachse drehbar gehalten und in einer gewählten Drehwinkelposition festlegbar ist. Der erste Exzenterring weist eine bezüglich seiner Drehachse exzentrisch angeordnete Positionieröffnung für die Aufnahme und Positionierung des Verbindungselementes auf. Durch Wahl eines bestimmten Drehwinkels des Exzenterrings kann seine Positionieröffnung und damit auch das hindurchgesteckte Verbindungselement in eine bestimmte gewünschte Relativposition zum Fertigteilverbinder und damit zum zugeordneten Betonfertigteil gebracht werden. Sobald das Verbindungselement festgezogen und die Verbindungsstelle belastet wird, ist eine Verdrehung des Exzenterrings aufgrund der hierauf wirkenden Kräfte nicht mehr möglich. Das Verbindungselement behält seine Relativpositionierung zum Betonfertigteil zuverlässig bei, in dessen Folge auch die beiden miteinander verbundenen Betonfertigteile ihre Relativpositionierung zueinander beibehalten.

Es kann ausreichen, nur einen solchen Exzenterring an einer Verbindungsstelle bzw. an einem Fertigteilverbinder vorzusehen. In vorteilhafter Weiterbildung umfassen die Positioniermittel jedoch zusätzlich auch einen zweiten Exzenterring, welcher in der Durchstecköffnung der Basisplatte um eine Drehachse drehbar gelagert und in einer gewählten Drehwinkelposition festlegbar ist, und welcher eine bezüglich seiner Drehachse exzentrisch angeordnete Positionieröffnung aufweist. In diesem Falle wird dann der vorgenannte erste Exzenterring in der exzentrischen Positionieröffnung des zweiten Exzenterrings drehbar aufgenommen, positioniert und in der gewählten Drehwinkelposition festgelegt. Beide Exzenterringe können im unbelasteten Zustand unabhängig voneinander relativ zueinander und auch relativ zur Basisplatte verdreht werden, so dass die Positionieröffnung des ersten Exzenterrings, welche das Verbindungselement aufnimmt, gemeinsam mit dem Verbindungselement in allen Richtungen der Ebene der Basisplatte beliebig verschoben und positioniert werden kann. In der Basisebene der Basisplatte erfolgt also eine zweidimensionale Positionierung, welche ebenso wie beim Einsatz von nur einem Exzenterring unter Last festliegt. Zusammen mit der axialen Verspannung entsteht damit eine dreidimensionale formschlüssige Lagepositionierung des Verbindungselementes relativ zum eingegossenen Fertigteilverbinder, was gleichermaßen eine dreidimensional formschlüssig festgelegte Relativpositionierung der beiden Betonfertigteile gegeneinander nach sich zieht.

Alternativ zur vorgenannten Exzenterringanordnung kann es zweckmäßig sein, dass die Positioniermittel mindestens eine Rastungsplatte umfassen, welche eine Positionieröffnung für die Aufnahme und Positionierung des Verbindungselementes aufweist und auf mindestens einer ihrer Flachseiten mit einer Rastverzahnung versehen ist. Außerdem weist auch die Basisplatte mindestens eine mit der Rastverzahnung der Rastungsplatte korrespondierende Rastverzahnung auf. Im unverspannten Zustand können die Rastungsplatte und zusammen mit ihr auch das hindurchgesteckte Verbindungselement beliebig verschoben und positioniert werden. Unter Last, also im verspannten Zustand des Verbindungselementes, greift jedoch die Rastung zwischen Rastungsplatte und verzahnter Basisplatte, so dass ein entsprechender Formschluss entsteht. Hierbei kann es für bestimmte Lastfälle ausreichen, nur eine Rastungsplatte mit nur in einer Richtung wirkender Rastverzahnung vorzusehen. Bevorzugt ist jedoch die Basisplatte mit zwei unterschiedlichen Rastverzahnungen versehen, welche zwei unterschiedliche und insbesondere in einem rechten Winkel zueinander liegende Rastrichtungen vorgeben. Dies kann eine einseitig aufgebrachte Kreuzverzahnung sein. Bevorzugt sind jedoch die zwei unterschiedlichen Rastverzahnungen auf den beiden sich gegenüberliegenden Flachseiten der Basisplatte angeordnet, wobei die Positioniermittel zwei zur Anlage an den beiden sich gegenüberliegenden Flachseiten der Basisplatte vorgesehene Rastungsplatten umfassen. Jedenfalls wird hierdurch ein Formschluss in allen Richtungen der Basisebene der Basisplatte erzeugt. In Verbindung außerdem mit der Kraftübertragung senkrecht zur Basisebene entsteht, ebenso wie bei den oben beschriebenen Exzenterringen, ein dreidimensionaler, räumlicher Formschluss zwischen dem Verbindungselement und dem Fertigteilverbinder, was gleichermaßen zu einem solchen dreidimensionalen Formschluss zwischen den beiden miteinander verbundenen Betonfertigteilen führt.

Gemäß der Erfindung ist der Fertigteilverbinder in das erste Betonfertigteil eingegossen, während in den gegenüberliegenden Bereich des angrenzenden zweiten Betonfertigteils ein Aufnahmeelement für das Verbindungselement eingesetzt ist. Bevorzugt ist das Verbindungselement eine Schraube, während korrespondierend dazu das Aufnahmeelement eine Schraubhülse ist. Das Verbindungselement wird von einer dem Aufnahmeelement bzw. der Schraubhülse gegenüber liegenden Seite der Basisplatte aus durch die Durchstecköffnung hindurchgesteckt und mit dem Aufnahmeelement verbunden bzw. in die Schraubhülse eingeschraubt. Hierdurch ist es möglich, an jeder Verbindungsstelle mit nur einem einzigen Exemplar des erfindungsgemäßen Fertigteilverbinders auszukommen. Außerdem muss das Verbindungselement nur von einer Seite aus, nämlich von der Seite des den Fertigteilverbinder aufnehmenden ersten Betonfertigteils aus, festgezogen werden. Materialeinsatz und Montageaufwand sind minimiert. Ausführungsbeispiele der Erfindung sind nachfolgend anhand der Zeichnung näher beschrieben. Es zeigen:
- Fig. 1: in einer schematischen Frontansicht zwei angedeutete Betonfertigteile, wobei in einem ersten Betonfertigteil ein erfindungsgemäß ausgeführter Fertigteilverbinder eingegossen ist, wobei durch diesen hindurch ein Verbindungselement in Form einer Schraube in eine Schraubhülse des zweiten Betonfertigteils eingeschraubt ist, und wobei außerdem Positioniermittel zur formschlüssigen Lagefixierung eingesetzt sind,
- Fig. 2: in einer perspektivischen Ansicht ein erstes Ausführungsbeispiel des Fertigteilverbinders nach Fig. 1 mit zwei eingesetzten Exzenterringen für eine formschlüssige Relativpositionierung,
- Fig. 3: in einer perspektivischen Ansicht ein weiteres Ausführungsbeispiel des erfindungsgemäßen Fertigteilverbinders mit einer Rastungsplatte und mit in einer Richtung wirkender Rastverzahnung,
- Fig. 4: eine Variante der Anordnung nach Fig. 3 mit um 90° gedrehter Rastrichtung,
- Fig. 5: in perspektivischer Ansicht eine Weiterbildung der beiden Ausführungen nach den Fig. 3 und 4 mit einer Kombination aus in beiden Richtungen wirkenden Verrastungen,
- Fig. 6: in einer Stirnansicht den Fertigteilverbinder nach Fig. 5 mit Einzelheiten zu seiner geometrischen Ausgestaltung,
- Fig. 7: eine vergrößerte Ausschnittsdarstellung der in Fig. 6 mit VII angegebenen Einzelheit,
- Fig. 8: eine Variante der Anordnung nach den Fig. 5 bis 7 mit Eingießankern in Form von kombinierten Rahmen- und Streifenelementen,
- Fig. 9: die Ausführungsform nach Fig. 8 mit weiter aufgebogenem Streifenelementen,
- Fig. 10: eine weitere Variante des erfindungsgemäßen Fertigteilverbinders mit ineinan-der geschachtelten Rahmenelementen,
- Fig. 11: eine Variante der Anordnung nach Fig. 1 mit über Eck positionierten und verbundenen Betonfertigteilen, und
- Fig. 12: in einer Draufsicht eine Variante des Fertigteilverbinders nach Fig. 5 mit insgesamt drei über Eck zueinander benachbarten Eingießankern.

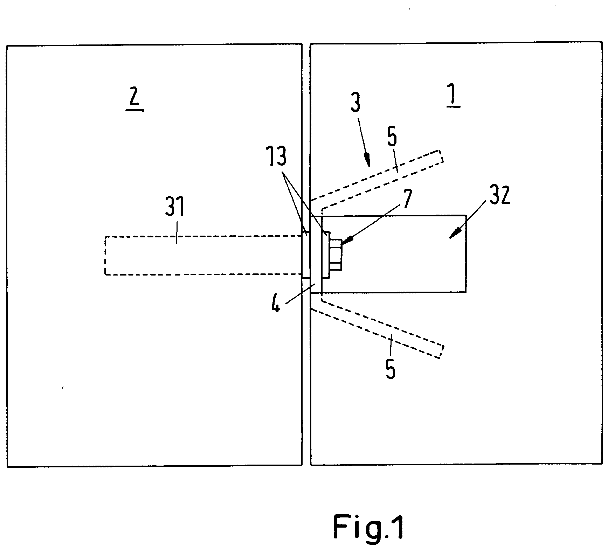

Fig. 1 zeigt in einer schematischen Frontansicht zwei miteinander in erfindungsgemäßer Weise verbundene Betonfertigteile 1, 2. Im ersten Betonfertigteil 1 ist ein schematisch angedeuteter, erfindungsgemäß ausgeführter Fertigteilverbinder 3 unter Beibehaltung einer Montagemulde 32 teilweise eingegossen. Es kann zweckmäßig sein, auch in das gegenüberliegende zweite Betonfertigteil 2 einen Fertigteilverbinder 3 analog zum ersten Betonfertigteil 1 einzugießen. In der gezeigten bevorzugten Ausführungsform umfasst jedoch die Verbindungsstelle bzw. das hier zum Einsatz kommende Verbindungssystem nur einen einzigen Fertigteilverbinder 3, welcher in das erste Betonfertigteil 1 eingegossen ist. Im gegenüberliegenden Betonfertigteil 2 ist stattdessen ein Aufnahmeelement eingesetzt, welches hier als Schraubhülse 31 ausgeführt ist.

Der Fertigteilverbinder 3 umfasst eine Basisplatte 4 sowie mindestens einen, hier beispielhaft zwei mit der Basisplatte 4 verbundene Eingießanker 5. Der Fertigteilverbinder 3 ist insoweit in das Betonmaterial des ersten Betonfertigteils 1 eingegossen, dass seine Eingießanker 5 vollständig und die Basisplatte 4 nur abschnittsweise angrenzend an die beiden Eingießanker 5 vom Betonmaterial umschlossen sind. Ein zentraler Abschnitt der Basisplatte 4 liegt frei und begrenzt in Richtung des benachbarten zweiten Betonfertigteils 2 die zum Betrachter hin offene Montagemulde 32. Ein Verbindungselement 7, welches hier als Schraube mit einem beispielhaft sechskantförmigen Schraubkopf ausgebildet ist, wurde bei der Montage in die Montagemulde 32 des ersten Betonfertigteils 1 eingesetzt und von derjenigen Seite der Basisplatte 4 aus, welche dem angrenzenden zweiten Betonfertigteil 2 mit der darin eingesetzten Schraubhülse 31 gegenüberliegt, durch die Basisplatte 4 des Fertigteilverbinders 3 hindurchgesteckt und in die Schraubhülse 31 des zweiten Betonfertigteils 2 eingeschraubt.

Die Schraubhülse 31 kann als eingegossener Hülsen- bzw. Bolzenanker ausgeführt sein. Alternativ kommt aber auch ein in eine geeignete Bohrung nachträglich eingesetzter Dübel in Betracht. Bevorzugt weist die Schraubhülse ein Innengewinde für die Aufnahme eines Außengewindes des Verbindungselementes 7 auf. Es kann aber auch eine selbstschneidende Aufnahme in Betracht kommen. Anstelle der Schraubhülse 31 kann ein anderes Aufnahmeelement für das Verbindungselement 7 vorgesehen sein. Denkbar ist z.B. im Rahmen der Erfindung, dass das Verbindungselement 7 nicht als Schraube, sondern als Schnellspannelement, Bajonettelement oder dgl. ausgeführt ist, wobei dann das genannte Aufnahmeelement an die Ausgestaltung des Verbindungselementes 7 angepasst ist.

Darüber hinaus sind noch Positioniermittel 13 als Teil des erfindungsgemäßen Verbindungssystems vorgesehen, welche hier nur schematisch angedeutet sind und weiter unten näher beschrieben werden. Sie dienen einer freien Positionierung und einer anschließenden formschlüssigen Lagefixierung des Verbindungselementes 7 relativ zur Basisplatte 4. Sobald das Verbindungselement 7 einseitig mittels eines in die Montagemulde 32 eingeführten Werkzeuges festgezogen ist, sind dann auch die beiden Betonfertigteile 1, 2 relativ zueinander nicht nur kraftschlüssig, sondern auch formschlüssig gegeneinander lagefixiert.

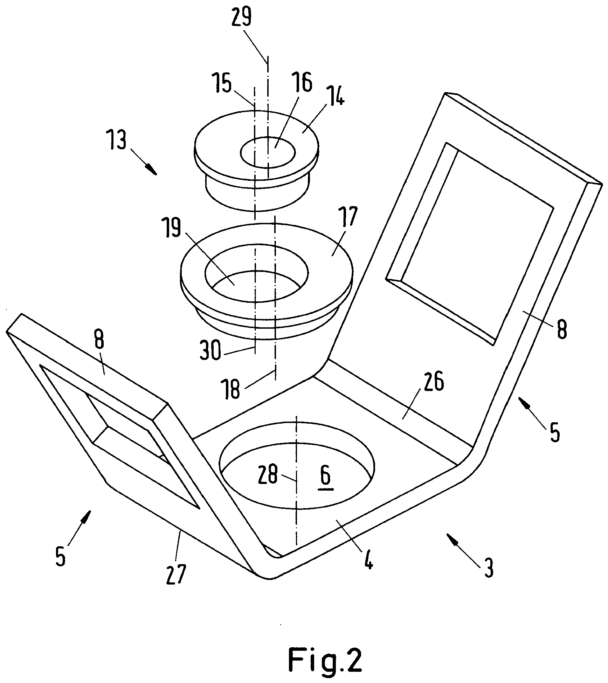

Fig. 2 zeigt in einer perspektivischen Ansicht ein erstes Ausführungsbeispiel des Fertigteilverbinders 3 für das erfindungsgemäße Verbindungssystem nach Fig. 1. In der perspektivischen Ansicht nach Fig.2 ist in Zusammenschau mit Fig. 1 erkennbar, dass die Basisplatte 4 eine Durchstecköffnung 6 für das Verbindungselement 7 aufweist, wobei jedoch der Querschnitt der Durchstecköffnung 6 erheblich größer ist als der Querschnitt des Verbindungselementes 7. Dieser Umstand erlaubt zunächst innerhalb gewisser Grenzen eine freie Relativpositionierung des Verbindungselementes 7 (Fig. 1) relativ zum Fertigteilverbinder 3 wie folgt: Die eingangs schon erwähnten Positioniermittel 13 umfassen im gezeigten Ausführungsbeispiel mindestens einen ersten Exzenterring 14 mit einer Positionieröffnung 16 für die Aufnahme und freie, variable Positionierung des Verbindungselementes 7 relativ zur Basisplatte 4 des Fertigteilverbinders 3. Es kann zweckmäßig sein, den ersten Exzenterring 14 unmittelbar in die Durchstecköffnung 6 des Fertigteilverbinders 3 einzusetzen. Im gezeigten bevorzugten Ausführungsbeispiel ist aber außerdem noch ein zweiter Exzenterring 17 mit einer zugehörigen Positionieröffnung 19 vorgesehen. Die Anordnung ist hier in Explosionsdarstellung gezeigt. Im montierten Zustand ist der zweite Exzenterring 17 in der Durchstecköffnung 6 der Basisplatte 4 drehbar gelagert. Die kreisförmige Durchstecköffnung 6 weist eine Lochachse 28 auf, die im montierten Zustand eine achsgleich liegende Drehachse 18 des zweiten Exzenterrings 17 vorgibt. Weiter ist erkennbar, dass die Positionieröffnung 19 des zweiten Exzenterrings 17 mit einer zugehörigen Lochachse 30 exzentrisch, also mit radialem Abstand zur Drehachse 18 liegt.

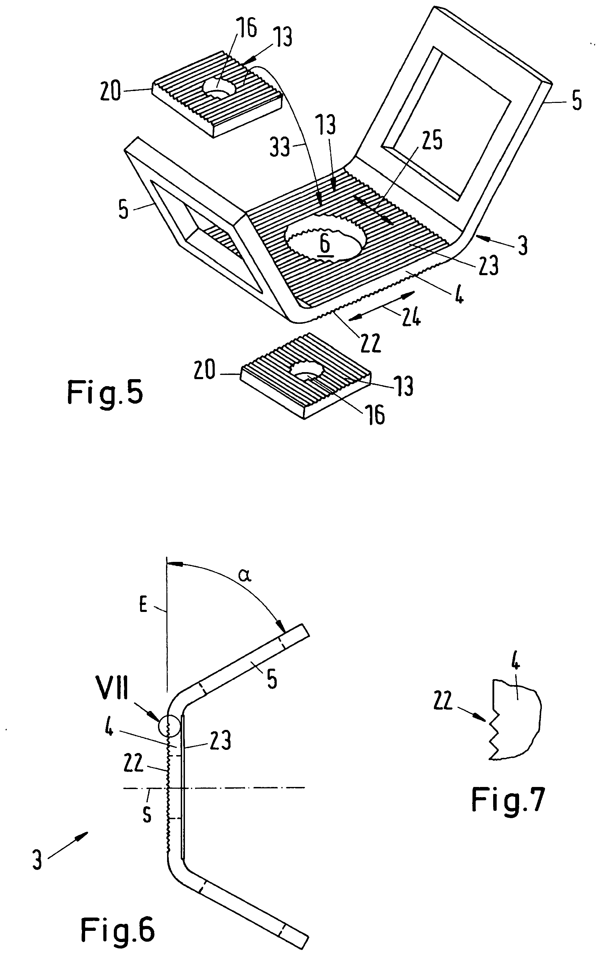

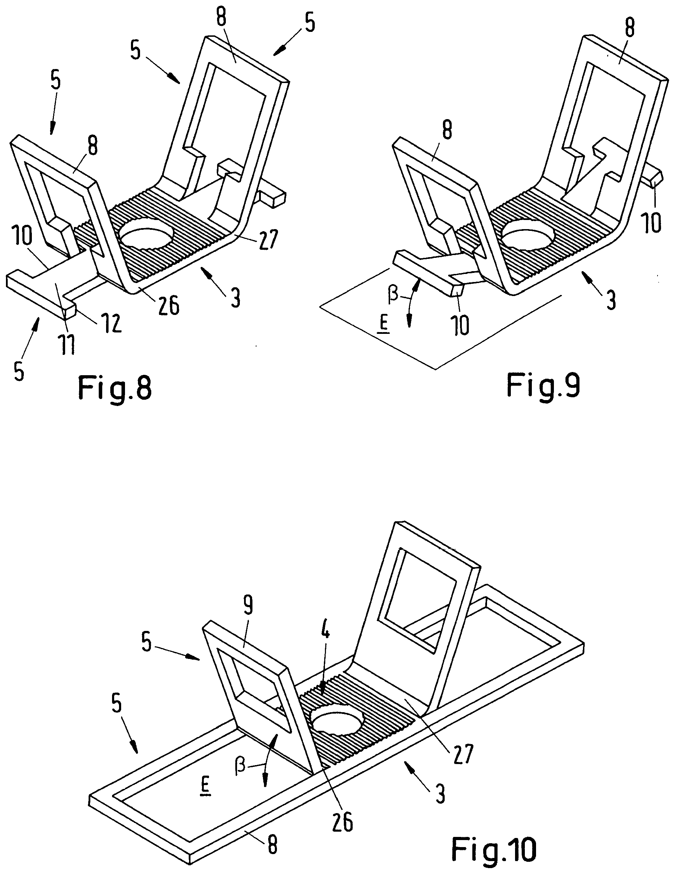

Analog das Gleiche gilt für den ersten Exzenterring 14: Dieser ist im montierten Zustand drehbar in der Positionieröffnung 19 des zweiten Exzenterrings 17 gelagert. Eine zugehörige Drehachse 15 des Exzenterrings 14 liegt dabei achsgleich zur Lochachse 30 der Positionieröffnung 19 im zweiten Exzenterring 17. Die im ersten Exzenterring 14 ausgebildete Positionieröffnung 16 liegt mit einer zugehörigen Lochachse 29 exzentrisch, also im radialen Abstand zur Drehachse 15 des ersten Exzenterrings 14. Beide Exzenterringe 14, 17 können unabhängig voneinander relativ zueinander bzw. relativ zur Basisplatte 4 verdreht werden. Dies ermöglicht eine beliebige Positionierung der Positionieröffnung 16 und des darin gehaltenen Verbindungselementes 7 (Fig. 1) relativ zur Basisplatte 4 in der in den Fig. 6 und 9 angedeuteten Basisebene E. Aus der Zusammenschau der Fig. 1 und 2 ergibt sich, dass die genannte Relativpositionierung auch gleichbedeutend mit einer Relativpositionierung der beiden Betonfertigteile 1, 2 gegeneinander ist.

Außerdem wird deutlich, dass im festgezogenen Zustand des Verbindungselementes 7 eine Relatiwerschiebung nicht mehr möglich ist. Aus Fig. 2 ergibt sich nämlich, dass der erste Exzenterring 14 mit einem Flansch auf der Oberfläche des zweiten Exzenterrings 17 aufliegt, während der zweite Exzenterring 17 mit einem Flansch auf der Oberfläche der Basisplatte 4 aufliegt. Infolge der axialen Verspannung des Verbindungselementes 7 entsteht eine ausreichend große Flächenpressung, in dessen Folge eine Verdrehung nicht mehr möglich ist. Sofern die beiden Betonfertigteile 1, 2 noch Belastungen in der Basisebene E der Basisplatte 4 aufbringen, führt dies außerdem zu entsprechenden Flächenpressungen an den Umfangsflächen der beiden Exzenterringe 14, 17, welche eine Verdrehung unterbindet. Jedenfalls ist das festgezogene Verbindungselement 7 formschlüssig in der Positionieröffnung 16 des ersten Exzenterrings 14 gehalten und dabei dreidimensional, also in allen Raumrichtungen formschlüssig und in Kombination damit auch kraftschlüssig relativ zum Fertigteilverbinder 3 gehalten. Folglich sind auch die beiden Betonfertigteile 1, 2 in gleicher Weise kombiniert formschlüssig und kraftschlüssig gegeneinander lagefixiert. Es kann aber auch zweckmäßig sein, zwischen den Exzenterringen 14, 17 und auch relativ zur Basisplatte einen Formschluss in Drehrichtung vorzusehen. In diesem Fall ist dann ein reiner, in allen Richtungen wirkender Formschluss gebildet.

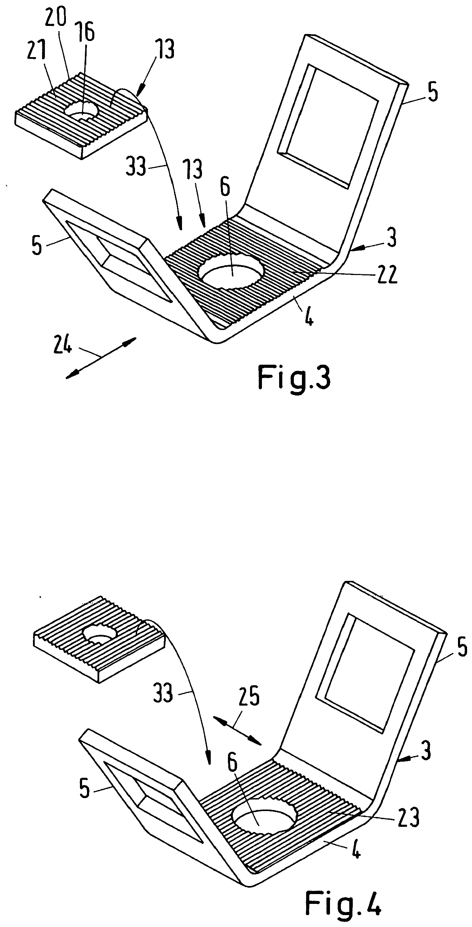

Ein weiteres erfindungsgemäßes Merkmal des in Fig. 2 dargestellten Fertigteilverbinders 3 betrifft noch die Ausgestaltung des mindestens einen, hier der beiden Eingießanker 5. Diese sind zusammen mit der Basisplatte 4 als einstückiges Blechbiegeteil ausgebildet, wozu weitere Einzelheiten weiter unten noch näher beschrieben werden. Im Ausführungsbeispiel nach Fig. 2 sind die beiden Eingießanker als Rahmenelement 8 ausgebildet, welche zusammen mit der Basisplatte 4 einen geschlossen umlaufenden Rahmen bilden. Anstelle des in Fig. 2 dargestellten Fertigteilverbinders 3 können aber auch andere erfindungsgemäß ausgeführte Fertigteilverbinder insbesondere in den Ausführungsformen nach den Fig. 3 bis 10 im Verbindungssystem gemäß Fig. 1 zum Einsatz kommen.

Fig. 3 zeigt in einer perspektivischen Ansicht ein weiteres Ausführungsbeispiel eines erfindungsgemäß ausgeführten Fertigteilverbinders 3. Auch hier ist der Querschnitt der Durchstecköffnung 6 deutlich größer als der Querschnitt des in Fig. 1 dargestellten Verbindungselementes 7. Abweichend vom Ausführungsbeispiel nach Fig. 2 sind jedoch die formschlüssigen Positioniermittel 13 nicht durch Exzenterringe, sondern durch eine Kombination einer Rastungsplatte 20 mit der Basisplatte 4 gebildet. Die Rastungsplatte 20 ist mit einer Positionieröffnung 16 für die zumindest näherungsweise spielfreie Aufnahme des Verbindungselementes 7 nach Fig. 1 versehen. Die Anordnung ist hier in Explosionsdarstellung gezeigt. Bei der Montage wird die Rastungsplatte 20 entsprechend einem Pfeil 33 auf die Oberseite der Basisplatte 4 aufgelegt. Auf ihrer im montierten Zustand der Basisplatte 4 zugewandten Flachseite ist die Rastungsplatte 20 mit einer Rastverzahnung 21 versehen, während die Basisplatte 4 auf ihrer der Rastungsplatte 20 zugewandten Oberfläche eine dazu korrespondierende Rastverzahnung 22 trägt. Im gezeigten Ausführungsbeispiel sind die beiden Rastverzahnungen 21, 22 durch parallele Rippen gebildet, welche im gezeigten Ausführungsbeispiel quer zwischen den beiden Eingießankern 5 hindurch verlaufen und dadurch senkrecht dazu, also in der von einem Eingießanker 5 zum gegenüberliegenden Eingießanker 5 laufenden Richtung eine durch einen Doppelpfeil 24 angegebene Rastrichtung erzeugen. Solange das Verbindungselement 7 gemäß Fig. 1 noch nicht verspannt ist, kann eine rastende Relativpositionierung der Funktionseinheit aus Verbindungselement 7 und Rastungsplatte 20 relativ zum Fertigteilverbinder 3 vorgenommen werden. Sobald jedoch das Verbindungselement 7 festgezogen wird, entsteht ein Formschluss zumindest in der Axialrichtung des Verbindungselementes 7 und in der Rastrichtung 24, während sich infolge der wirkenden Klemmkräfte senkrecht zur Rastrichtung 24 zumindest ein Kraftschluss einstellt.

Fig. 4 zeigt eine Variante der Anordnung nach Fig. 3, wobei die Richtungen der Rastverzahnungen 21, 22 gegenüber dem Ausführungsbeispiel nach Fig. 3 um 90° gedreht sind. Dementsprechend stellt sich auch eine senkrecht zur Rastrichtung 24 nach Fig. 3 liegende Rastrichtung 25 ein. Insgesamt ergibt sich daraus, dass durch eine Richtungsvorgabe der Rastverzahnungen 21, 22 eine mehr oder weniger beliebige Rastrichtung 24, 25 eingestellt werden kann, wodurch eine Anpassung an die auf die beiden Betonfertigteile 1, 2 (Fig. 1) einwirkenden Lastfälle möglich ist.

Fig. 5 zeigt noch eine Variante der beiden Ausführungsformen nach den Fig. 3 und 4, wobei insgesamt zwei identische Rastungsplatten 20 zum Einsatz kommen. Im montierten Zustand liegt je eine Rastungsplatte 20 auf den beiden gegenüberliegenden Flachseiten der Basisplatte 4 auf. Dabei sind zwei Rastverzahnungen 22, 23 auf den beiden sich gegenüberliegenden Flachseiten der Basisplatte 4 ausgebildet, welche bei ansonsten gleicher Geometrie sich insoweit voneinander unterscheiden, dass sie infolge unterschiedlicher Ausrichtung zwei unterschiedliche und hier im rechten Winkel zueinander liegende Rastrichtungen 24, 25 vorgeben. Infolge der unterschiedlichen Rastrichtungen 24, 25, welche sich gegenseitig ergänzen, ergibt sich insgesamt eine dreidimensionale, also in allen räumlichen Richtungen wirkende formschlüssige Lagefixierung des Verbindungselements 7 (Fig. 1) relativ zum Fertigteilverbinder 3, was im festgezogenen Zustand auch zu einer solchen dreidimensionalen formschlüssigen Lagesicherung der beiden montierten Betonfertigteile 1, 2 führt.

Fig. 6 zeigt in einer Stirnansicht den Fertigteilverbinder 3 nach Fig. 5. Auch hier ist die unterschiedliche Orientierung der beiden Rastverzahnungen 22, 23 erkennbar. In Fig. 6 ist eine Einzelheit VII markiert, welche in vergrößerter Darstellung in Fig. 7 gezeigt ist. Dort ist erkennbar, dass die Rastverzahnung 4 in der Oberfläche der Basisplatte 4 durch im Querschnitt sägezahnförmige Rippen gebildet ist. Als Öffnungswinkel zwischen den Flanken der sägezahnartigen Dreiecksquerschnitte kommen bevorzugt Winkel in einem Bereich von ≥ 60° bis ≤ 90° zum Einsatz. Es können aber auch andere Öffnungswinkel zweckmäßig sein. Gleiches gilt sinngemäß für sämtliche Rastverzahnungen 21, 22, 23 der Ausführungsbeispiele nach den Fig. 3 bis 10.

Weiter ist in Fig. 6 noch zu erkennen, dass die Basisplatte 4 des Fertigteilverbinders 3 in einer Basisebene E liegt. Mindestens ein Eingießanker 5, hier beide Eingießanker 5, sind gegenüber der Basisplatte 4 aus der Basisebene E heraus um einen Winkel α aufgebogen, was gleichermaßen auch für die übrigen Ausführungsbeispiele gilt. Der Winkel α liegt bevorzugt in einem Bereich von ≥ 0° bis ≤ 120° und zweckmäßig in einem Bereich von ≥ 30° bis ≤ 90°. Im gezeigten Ausführungsbeispiel beträgt er etwa 60°. Zur Vermeidung von Spannungsspitzen sind die Eingießanker 5 gegenüber der Basisplatte 4 nicht scharfkantig abgewinkelt, sondern mit einem Biegeradius umgebogen. Außerdem ist in Fig. 6 erkennbar, dass der Fertigteilverbinder 3 eine Symmetrieebene S aufweist, wobei die Eingießanker 5 spiegelsymmetrisch zur Symmetrieebene S angeordnet sind.

Sofern nicht ausdrücklich abweichend erwähnt, stimmen die Ausführungsbeispiele nach den Fig. 1 bis 7 untereinander in den übrigen Merkmalen und Bezugszeichen überein.

Fig. 8 zeigt in einer perspektivischen Ansicht ein weiteres Ausführungsbeispiel eines erfindungsgemäß ausgeführten Fertigteilverbinders 3, wobei zumindest ein Eingießanker 5, hier zwei sich spiegelsymmetrisch gegenüberliegende Eingießanker 5 als Streifenelemente 10 mit jeweils einem Längsträger 11 und einem außenseitig sich daran anschließenden Querbalken 12 ausgebildet sind. Des weiteren ist in Fig. 8 erkennbar, dass die Basisplatte 4 zwei sich gegenüberliegende Kanten 21, 22 aufweist, und dass an zumindest einer der beiden Kanten 26, 27, hier an beiden Kanten 26, 27 jeweils mehrere, hier jeweils zwei Eingießanker 5 angrenzen. Im gezeigten Ausführungsbeispiel grenzen je ein als Rahmenelement 8 ausgebildeter Eingießanker 5 und je ein als Streifenelement 10 ausgebildeter Eingießanker 5 an je eine der beiden Kanten 26, 27 an.

Fig. 9 zeigt die Anordnung nach Fig. 8, wobei die beiden als Streifenelement 10 ausgebildeten Eingießanker 5 um einen Winkel β gegenüber der Basisplatte 4 aus der Basisebene E heraus aufgebogen sind. Gemäß Fig. 8 können die Streifenelemente 10 aber auch ohne eine solche Aufbiegung versehen sein. Jedenfalls liegt der Winkel β bevorzugt in einem Bereich von ≥ 0° bis ≤ 90° und beträgt im Ausführungsbeispiel nach Fig. 9 etwa 30°. In den beiden Fällen der Fig. 8 und 9 sind jedoch die als Rahmenelemente 8 ausgebildeten Eingießanker 5 gemäß der Darstellung nach Fig. 6 um einen dort eingetragenen Winkel α aufgebogen. Bevorzugt soll erreicht werden, dass die beiden Winkel α, β unterschiedlich sind.

Eine weitere Variante des erfindungsgemäßen Fertigteilverbinders 3 ist in der perspektivischen Darstellung nach Fig. 10 gezeigt. In Übereinstimmung mit den Ausführungsbeispielen nach den Fig. 8 und 9 grenzen jeweils zwei Eingießanker 5 an jeweils eine der beiden gegenüberliegenden Kanten 21, 22 der Basisplatte 4 an. Hierbei sind jedoch sämtliche Eingießanker 5 als Rahmenelemente 8, 9 ausgeführt, welche jeweils einen geschlossenen Rahmen bilden. Der in Fig. 7 bezeichnete Winkel α der äußeren Rahmenelemente 9 beträgt hier 0°, während der Winkel β der inneren Rahmenelemente 9 etwa 60° beträgt. Aber auch in diesem Ausführungsbeispiel gilt für die infrage kommenden Bereiche der Winkel α, β das weiter oben Gesagte.

Gemeinsames Merkmal der Ausführungsbeispiele nach den Fig. 8 bis 10 ist der Umstand, dass die mehreren jeweils an einer der beiden Kanten 26, 27 angrenzenden Eingießanker 5 zwar in unterschiedlichen Winkeln α, β relativ zur Basisebene E liegen, dass sie aber in einem auf die Basisebene E abgewickelten Zustand, also vor dem Biegeprozess des ursprünglich ebenen Bleches, ineinander geschachtelt waren. Dies ermöglicht trotz der Vielzahl der vorhandenen Eingießanker 5 eine insgesamt einteilige Ausführung aus Blech ausschließlich durch Stanzen und Biegen bzw. Umformen, ohne dass Verbindungstechniken wie Schweißen oder dergleichen angewendet werden müssen.

Weiter ist erkennbar, dass die Ausführungsbeispiele nach den Fig. 8 bis 10 Rastverzahnungen entsprechend den Ausführungsbeispielen nach den Fig. 3 bis 7 aufweisen. Anstelle dieser Rastverzahnung können aber auch hier ein oder mehrere Exzenterringe gemäß dem Ausführungsbeispiel nach Fig. 2 zum Einsatz kommen.

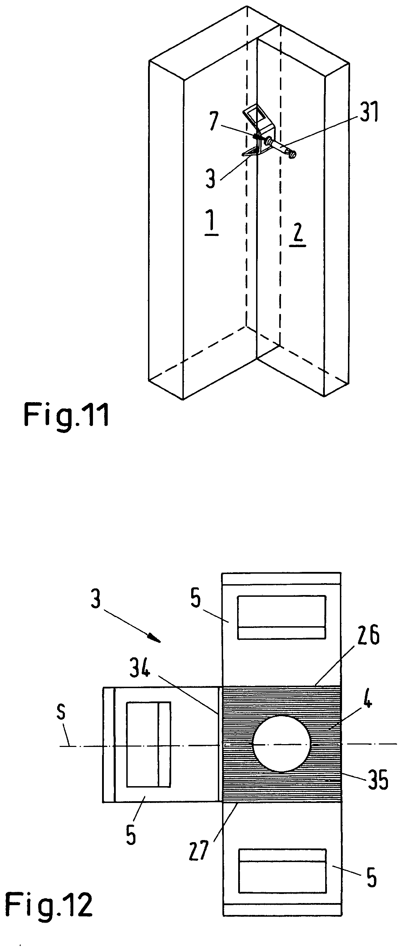

Fig. 11 zeigt in einer schematischen Perspektivansicht eine Variante der Anordnung nach Fig. 1. Die beiden Betonfertigteile 1, 2 sind hier nicht wie in Fig. 1 in einer gemeinsamen Ebene angeordnet, sondern über Eck, also in einem von 0° bzw. von 180° abweichenden Winkel zueinander positioniert und miteinander verbunden. Der Winkel zwischen den Ebenen der beiden Betonfertigteile 1, 2 beträgt hier beispielhaft 90°. Im gezeigten Ausführungsbeispiel grenzen die beiden Betonfertigteile 1, 2 im Bereich zweier benachbarter Längskanten aneinander an, so dass eine Eckverbindung entstanden ist. Es ist aber auch eine T-Verbindung möglich, bei der das eine Betonfertigteil 1, 2 mit seiner zugehörigen Kante gegen einen Mittenbereich des jeweils anderen Betonfertigteils 2, 1 stößt. Jedenfalls grenzt entsprechend der Darstellung nach Fig. 11 dasjenige Betonfertigteil 1, in welchem der Fertigteilverbinder 3 eingegossen ist, mit seiner zugehörigen Flachseite gegen eine an der Kante befindliche Stirnfläche des weiteren Betonfertigteils 2, in welchem das Aufnahmeelement, hier die Schraubhülse 31 gehalten ist. Dies setzt voraus, dass der Fertigteilverbinder 3 gegenüber Fig. 1 um 90° gedreht ist, dass also die Achse des Verbindungselementes 7 nicht wie in Fig. 1 in der Ebene des ersten Betonfertigteils 1, sondern senkrecht dazu liegt. Natürlich kann es im Rahmen der Erfindung auch möglich sein, bei einer Winkelverbindung vergleichbar zu Fig. 11 den Fertigteilverbinder 3 und die Achse des Verbindungselementes in der Ausrichtung entsprechend Fig. 1 zu belassen, wobei dann das Aufnahmeelement, hier die Schraubhülse 31 in einem entsprechenden Winkel zur Ebene des zugehörigen Betonfertigteils 2 anzuordnen ist.

Fig. 12 zeigt noch in einer Draufsicht eine Variante des Fertigteilverbinders nach Fig. 5. Es ist erkennbar, dass die Basisplatte 4 ebenso wie bei den anderen Ausführungsbeispielen eine rechteckige, hier quadratische Grundfläche aufweist, die von insgesamt vier Kanten 26, 27, 34, 35 begrenzt ist. Eine Kante 26 ist über Eck mit zwei Kanten 34, 35 benachbart. Mit anderen Worten grenzen die beiden Kanten 34, 35 in der Ebene der Basisplatte 4 an jeweils einer gemeinsamen Ecke an die Kante 26 an. Sinngemäß das Gleiche gilt auch für die Kante 27 mit den über Eck benachbarten Kanten 34, 35. In einer optional möglichen Ausführungsform der Erfindung grenzt an zumindest zwei dieser über Eck benachbarten Kanten 26, 27, 34 jeweils mindestens ein Eingießanker 5 an. Im Ausführungsbeispiel nach Fig. 12 grenzt an insgesamt drei über Eck benachbarte Kanten 26, 27, 34 jeweils mindestens ein, hier genau ein Eingießanker 5 an. Für die mögliche Anzahl und Ausgestaltung der Eingießanker 5 einschließlich ihrer Biegewinkel gilt das Gleiche wie das zu den übrigen Ausführungsbeispielen Gesagte. Außerdem ist erkennbar, dass durch den mittleren Eingießanker 5, welcher an die Kante 34 angrenzt, eine Symmetrieebene S verläuft, zu der der Fertigteilverbinder 3 spiegelsymmetrisch ausgebildet ist.

Die hier gezeigte bzw. beschriebene Ausführungsform des Fertigteilverbinders 3 kann bevorzugt in Eckverbindungen gemäß Fig. 11 eingesetzt werden, ist aber auch für in einer Ebene liegende Verbindungen gemäß Fig. 1 geeignet. Die Anordnung von Eingießankern 5 an insgesamt drei Kanten 26, 27, 34 der Basisplatte 4 führt zu einer weiteren Erhöhung der Tragfähigkeit.

Im Übrigen gilt auch für die Ausführungsbeispiele nach den Fig. 8 bis 12, sofern es nicht ausdrücklich anders beschrieben oder dargestellt ist, dass sie in den übrigen Merkmalen und Bezugszeichen untereinander sowie mit den Ausführungsbeispielen nach den Fig. 1 bis 7 übereinstimmen.

## Patentansprüche

1. Verbindungssystem zum Verbinden eines ersten Betonfertigteils (1) mit einem zweiten Betonfertigteil (2), umfassend einen Fertigteilverbinder (3) und ein Verbindungselement (7), wobei der Fertigteilverbinder (3) eine Basisplatte (4) und mindestens einen mit der Basisplatte (4) verbundenen Eingießanker (5) zum Eingießen im ersten Betonfertigteil (1) umfasst, wobei die Basisplatte (4) in einer Basisebene (E) liegt und eine Durchstecköffnung (6) für ein Verbindungselement (7) aufweist, wobei die Basisplatte (4) und der mindestens eine Eingießanker (5) als einstückiges Blechbiegeteil ausgebildet sind, und wobei der mindestens eine Eingießanker (5) gegenüber der Basisplatte (4) aus der Basisebene (E) heraus um einen Winkel (α, β) aufgebogen ist,
**dadurch gekennzeichnet, dass** der Querschnitt der Durchstecköffnung (6) größer ist als der Querschnitt des Verbindungselementes (7), dass das Verbindungssystem Positioniermittel (13) zur freien Positionierung und zur formschlüssigen Lagefixierung des durch die Durchstecköffnung (6) hindurchgeführten Verbindungselementes (7) in zumindest einer in der Basisebene (E) der Basisplatte (4) liegenden Richtung aufweist, dass der Fertigteilverbinder (3) in das erste Betonfertigteil (1) eingegossen ist, und dass in den gegenüberliegenden Bereich des angrenzenden zweiten Betonfertigteils (2) ein Aufnahmeelement für das Verbindungselement (7) eingesetzt ist, wobei das Verbindungselement (7) von einer dem Aufnahmeelement gegenüberliegenden Seite der Basisplatte (4) aus durch die Durchstecköffnung (6) hindurch gesteckt und von dort aus mit dem Aufnahmeelement des zweiten Betonfertigteils (2) verbunden ist.

2. Verbindungssystem nach Anspruch 1,
**dadurch gekennzeichnet, dass** die Positioniermittel (13) einen ersten Exzenterring (14) umfassen, welcher relativ zur Basisplatte (4) mit der Durchstecköffnung (6) um eine Drehachse (15) drehbar gehalten und in einer gewählten Drehwinkelposition festlegbar ist, und welcher eine bezüglich seiner Drehachse (15) exzentrisch angeordnete Positionieröffnung (16) für die Aufnahme und Positionierung des Verbindungselementes (7) aufweist.

3. Verbindungssystem nach Anspruch 2,
**dadurch gekennzeichnet, dass** die Positioniermittel (13) einen zweiten Exzenterring (17) umfassen, welcher in der Durchstecköffnung (6) der Basisplatte (4) um eine Drehachse (18) drehbar gelagert und in einer gewählten Drehwinkelposition festlegbar ist, und welcher eine bezüglich seiner Drehachse (18) exzentrisch angeordnete Positionieröffnung (19) aufweist, in der der erste Exzenterring (14) um seine Drehachse (15) drehbar gehalten und in einer gewählten Drehwinkelposition festlegbar ist.

4. Verbindungssystem nach Anspruch 1,
**dadurch gekennzeichnet, dass** die Positioniermittel (13) mindestens eine Rastungsplatte (20) umfassen, welche eine Positionieröffnung (16) für die Aufnahme und Positionierung des Verbindungselementes (7) aufweist und auf mindestens einer ihrer Flachseiten mit einer Rastverzahnung (21) versehen ist, und dass die Basisplatte (4) mindestens eine mit der Rastverzahnung (21) der Rastungsplatte (20) korrespondierende Rastverzahnung (22, 23) aufweist.

5. Verbindungssystem nach Anspruch 4,
**dadurch gekennzeichnet, dass** die Rastverzahnungen (21, 22, 23) derart ausgestaltet sind, dass sie zwei unterschiedliche und insbesondere in einem rechten Winkel zueinander liegende Rastrichtungen (24, 25) vorgeben.

6. Verbindungssystem nach Anspruch 5,
**dadurch gekennzeichnet, dass** die zwei unterschiedlichen Rastverzahnungen (22, 23) mit unterschiedlichen Rastrichtungen (24, 25) auf den beiden sich gegenüberliegenden Flachseiten der Basisplatte (4) angeordnet sind, und dass die Positioniermittel (13) zwei zur Anlage an den beiden sich gegenüberliegenden Flachseiten der Basisplatte (4) vorgesehene Rastungsplatten (20) umfassen.

7. Verbindungssystem nach einem der Ansprüche 1 bis 6,
**dadurch gekennzeichnet, dass** das Verbindungselement (7) eine Schraube ist, und dass das im zweiten Betonfertigteil (2) eingesetzte Aufnahmeelement eine Schraubhülse (31) ist, wobei die Schraube von einer der Schraubhülse (31) gegenüberliegenden Seite der Basisplatte (4) aus durch die Durchstecköffnung (6) hindurch gesteckt und in die Schraubhülse (31) eingeschraubt ist.

8. Verbindungssystem nach einem der Ansprüche 1 bis 7,
**dadurch gekennzeichnet, dass** die Basisplatte (4) zwei sich gegenüberliegende Kanten (26, 27) aufweist, und dass an jede der beiden sich gegenüberliegenden Kanten (26, 27) jeweils mindestens ein Eingießanker (5) angrenzt.

9. Verbindungssystem nach einem der Ansprüche 1 bis 7,
**dadurch gekennzeichnet, dass** die Basisplatte (4) Kanten (26, 27, 34) aufweist, und dass an zumindest zwei und insbesondere an drei Kanten (26, 27, 34), welche über Eck zueinander benachbart sind, jeweils mindestens ein Eingießanker (5) angrenzt.

10. Verbindungssystem nach Anspruch 8 oder 9,
**dadurch gekennzeichnet, dass** der Fertigteilverbinder (3) eine Symmetrieebene (S) aufweist, und dass die Eingießanker (5) spiegelsymmetrisch zur Symmetrieebene (S) angeordnet sind.

11. Verbindungssystem nach einem der Ansprüche 1 bis 10,
**dadurch gekennzeichnet, dass** zumindest ein Eingießanker (5) als Rahmenelement (8, 9) ausgebildet ist, welches insbesondere zusammen mit der Basisplatte (4) einen geschlossen umlaufenden Rahmen bildet.

12. Verbindungssystem nach einem der Ansprüche 1 bis 11,
**dadurch gekennzeichnet, dass** zumindest ein Eingießanker (5) als Streifenelement (10) mit einem Längsträger (11) und mit einem Querbalken (12) ausgebildet ist.

13. Verbindungssystem nach einem der Ansprüche 1 bis 12,
**dadurch gekennzeichnet, dass** die Basisplatte (4) Kanten (26, 27, 34) aufweist, und dass an zumindest einer der Kanten (26, 27, 34) mehrere Eingießanker (5) angrenzen, welche in einem auf die Basisebene (E) abgewickelten Zustand ineinander geschachtelt sind, und welche relativ zur Basisplatte (4) aus deren Basisebene (E) heraus in unterschiedlichen Winkeln (α, β) aufgebogen sind.

## Claims

1. Connection system for connecting a first prefabricated concrete part (1) to a second prefabricated concrete part (2), comprising a prefabricated part connector (3) and a connecting element (7), wherein the prefabricated part connector (3) comprises a base plate (4) and at least one cast-in anchor (5) connected to the base plate (4) for casting into the first prefabricated concrete part (1), wherein the base plate (4) lies in a base plane (E) and has a through-opening (6) for a connecting element (7), wherein the base plate (4) and the at least one cast-in anchor (5) are designed as a one-piece sheet metal bending part and wherein the at least one cast-in anchor (5) is bent up from the base plane (E) with respect to the base plate (4) at an angle (α, β),
**characterised in that** the cross-section of the through-opening (6) is larger than the cross-section of the connecting element (7), **in that** the connection system has positioning means (13) for the free positioning and the positive location of the connecting element (7) routed through the through-opening (6) in at least one direction lying in the base plane (E) of the base plate (4), **in that** the prefabricated part connector (3) is cast into the first prefabricated concrete part (1), and **in that** a reception element for the connecting element (7) is installed into the opposite region of the adjoining second prefabricated concrete part (2), wherein the connecting element (7) is inserted through the through-opening (6) from a side of the base plate (4) which is opposite the reception element and from there connected to the reception element of the second prefabricated concrete part (2).

2. Connection system according to claim 1,
**characterised in that** the positioning means (13) comprise a first eccentric ring (14), which is held rotatably about an axis of rotation (15) relative to the base plate (4) with the through-opening (6) and locatable in a selected rotary angle position, and which has a positioning opening (16) for the accommodation and positioning of the connecting element (7), which positioning opening (16) is arranged eccentrically with respect to its axis of rotation (15).

3. Connection system according to claim 2,
**characterised in that** the positioning means (13) comprise a second eccentric ring (17), which is mounted rotatably about an axis of rotation (18) in the through-opening (6) of the base plate (4) and locatable in a selected rotary angle position, and which has a positioning opening (19), which is arranged eccentrically with respect to its axis of rotation (18), in which positioning opening (19) the first eccentric ring (14) is held rotatably about its axis of rotation (15) and locatable in a selected rotary angle position.

4. Connection system according to claim 1,
**characterised in that** the positioning means (13) comprises at least one latching plate (20), which has a positioning opening (16) for the accommodation and positioning of the connecting element (7) and which is provided with a latching toothing (21) on at least one of its flat sides, and **in that** the base plate (4) has at least one latching toothing (22, 23) corresponding to the latching toothing (21) of the latching plate (20).

5. Connection system according to claim 4,
**characterised in that** the latching toothings (21, 22, 23) are designed such that they predetermine two different latching directions (24, 25), which are perpendicular to each other in particular.

6. Connection system according to claim 5,
**characterised in that** the two different latching toothings (22, 23) with different latching directions (24, 25) are located on the two opposite flat sides of the base plate (4), and **in that** the positioning means (13) comprise two latching plates (20) provided for bearing against the two opposite flat sides of the base plate (4).

7. Connection system according to any of claims 1 to 6,
**characterised in that** the connecting element (7) is a screw, and **in that** the reception element installed into the second prefabricated concrete part (2) is a collet (31), wherein the screw is inserted through the through-opening (6) from a side of the base plate (4) which is opposite the collet (31) and screwed into the collet (31).

8. Connection system according to any of claims 1 to 7,
**characterised in that** the base plate (4) has two oppositely located edges (26, 27), and **in that** at least one cast-in anchor (5) adjoins each of the two oppositely located edges (26, 27).

9. Connection system according to any of claims 1 to 7,
**characterised in that** the base plate (4) has edges (26, 27, 34), and **in that** at least one cast-in anchor (5) adjoins at least two and in particular three edges (26, 27, 34), which adjoin one another at the corners.

10. Connection system according to claim 8 or 9,
**characterised in that** the prefabricated part connector (3) has a plane of symmetry (S), and **in that** the cast-in anchors (5) are arranged mirror-symmetrically with respect to the plane of symmetry (S).

11. Connection system according to any of claims 1 to 10,
**characterised in that** at least one cast-in anchor (5) is designed as a frame element (8, 9), which forms a closed continuous frame together with the base plate (4) in particular.

12. Connection system according to any of claims 1 to 11,
**characterised in that** at least one cast-in anchor (5) is designed as a strip element (10) with a side member (11) and a crossbar (12).

13. Connection system according to any of claims 1 to 12,
**characterised in that** the base plate (4) has edges (26, 27, 34), and **in that** several cast-in anchors (5) adjoin at least one of the edges (26, 27, 34), which cast-in anchors (5) are nested in a state in which they are angled towards the base plane (S) and which cast-in anchors (5) are bent up from the base plane (E) with respect to the base plate (4) at different angles (α, β).

## Revendications

1. Système de liaison pour relier un premier élément préfabriqué en béton (1) à un deuxième élément préfabriqué en béton (2), comprenant un organe de liaison d'éléments préfabriqués (3) et un élément de liaison (7), dans lequel l'organe de liaison d'éléments préfabriqués (3) comprend une plaque de base (4) et au moins une pièce d'ancrage à couler (5) reliée à la plaque de base (4) et à couler dans le premier élément préfabriqué en béton (1), dans lequel la plaque de base (4) est située dans un plan de base (E) et présente une ouverture de passage (6) pour un élément de liaison (7), dans lequel la plaque de base (4) et la au moins une pièce d'ancrage à couler (5) sont formées comme une pièce pliée en tôle d'un seul tenant, et dans lequel la au moins une pièce d'ancrage à couler (5) est pliée par rapport à la plaque de base (4), à partir du plan de base (E), suivant un angle (α, β),
**caractérisé en ce que** la section transversale de l'ouverture de passage (6) est plus grande que la section transversale de l'élément de liaison (7), **en ce que** le système de liaison comporte des moyens de positionnement (13) pour le positionnement libre et pour la fixation en position par complémentarité de forme de l'élément de liaison (7) passant à travers l'ouverture de passage (6), dans au moins une direction située dans le plan de base (E) de la plaque de base (4), **en ce que** l'organe de liaison d'éléments préfabriqués (3) est coulé dans le premier élément préfabriqué en béton (1), et **en ce qu'**un élément de réception pour l'élément de liaison (7)est inséré dans la zone opposée du deuxième élément préfabriqué en béton (2) adjacent, dans lequel l'élément de liaison (7) passe à travers l'ouverture de passage (6) depuis un côté de la plaque de base (4) opposé à l'élément de réception et, de là, est relié à l'élément de réception du deuxième élément préfabriqué en béton (2).

2. Système de liaison selon la revendication 1,
**caractérisé en ce que** les moyens de positionnement (13) comprennent un premier anneau excentrique (14) qui est maintenu à rotation autour d'un axe de rotation (15) par rapport à la plaque de base (4) avec l'ouverture de passage (6) et est apte à être immobilisé dans une position d'angle de rotation choisie, et qui présente une ouverture de positionnement (16) disposée de manière excentrique par rapport à son axe de rotation (15), pour recevoir et positionner l'élément de liaison (7).

3. Système de liaison selon la revendication 2,
**caractérisé en ce que** les moyens de positionnement (13) comprennent un deuxième anneau excentrique (17) qui est monté à rotation autour d'un axe de rotation (18) dans l'ouverture de passage (6) de la plaque de base (4) et est apte à être immobilisé dans une position d'angle de rotation choisie, et qui présente une ouverture de positionnement (19) disposée de manière excentrique par rapport à son axe de rotation (18) et dans laquelle le premier anneau excentrique (14) est maintenu à rotation autour de son axe de rotation (15) et est apte à être immobilisé dans une position d'angle de rotation choisie.

4. Système de liaison selon la revendication 1,
**caractérisé en ce que** les moyens de positionnement (13) comprennent au moins une plaque d'enclenchement (20) qui présente une ouverture de positionnement (16) pour recevoir et positionner l'élément de liaison (7) et est pourvue sur l'un au moins de ses côtés plats d'une denture d'enclenchement (21), et **en ce que** la plaque de base (4) présente au moins une denture d'enclenchement (22, 23) correspondant à la denture d'enclenchement (21) de la plaque d'enclenchement (20).

5. Système de liaison selon la revendication 4,
**caractérisé en ce que** les dentures d'enclenchement (21, 22, 23) sont configurées de manière à prédéfinir deux directions d'enclenchement (24, 25) différentes et situées en particulier à angle droit l'une par rapport à l'autre.

6. Système de liaison selon la revendication 5,
**caractérisé en ce que** les deux dentures d'enclenchement (22, 23) différentes sont disposées avec des directions d'enclenchement (24, 25) différentes sur les deux côtés plats opposés de la plaque de base (4), et **en ce que** les moyens de positionnement (13) comprennent deux plaques d'enclenchement (20) destinées à être appliquées sur les deux côtés plats opposés de la plaque de base (4).

7. Système de liaison selon l'une des revendications 1 à 6,
**caractérisé en ce que** l'élément de liaison (7) est une vis, et **en ce que** l'élément de réception inséré dans le deuxième élément préfabriqué en béton (2) est un manchon fileté (31), dans lequel la vis est passée, depuis un côté de la plaque de base (4) opposé au manchon fileté (31), à travers l'ouverture de passage (6) et est vissée dans le manchon fileté (31).

8. Système de liaison selon l'une des revendications 1 à 7,
**caractérisé en ce que** la plaque de base (4) présente deux bords opposés (26, 27), et **en ce qu'**au moins une pièce d'ancrage (5) est adjacente à chacun des deux bords opposés (26, 27).

9. Système de liaison selon l'une des revendications 1 à 7,
**caractérisé en ce que** la plaque de base (4) présente des bords (26, 27, 34) et **en ce qu'**au moins une pièce d'ancrage (5) est adjacente respectivement à au moins deux et en particulier trois bords (26, 27, 34) qui sont voisins par un coin.

10. Système de liaison selon la revendication 8 ou 9,
**caractérisé en ce que** l'organe de liaison d'éléments préfabriqués (3) présente un plan de symétrie (S), et **en ce que** les pièces d'ancrage à couler (5) sont disposées en miroir par rapport au plan de symétrie (S).

11. Système de liaison selon l'une des revendications 1 à 10,
**caractérisé en ce qu'**au moins une pièce d'ancrage (5) est formée comme un élément formant cadre (8, 9) qui forme en particulier conjointement avec la plaque de base (4) un cadre fermé sur lui-même.

12. Système de liaison selon l'une des revendications 1 à 11,
**caractérisé en ce qu'**au moins une pièce d'ancrage (5) est formée comme un élément à bande (10) avec un élément longitudinal (11) et une barre transversale (12).

13. Système de liaison selon l'une des revendications 1 à 12,
**caractérisé en ce que** la plaque de base (4) présente des bords (26, 27, 34) et **en ce qu'**à l'un au moins des bords (26, 27, 34) sont adjacentes plusieurs pièces d'ancrage à couler (5) qui, dans un état développé sur le plan de base (E), sont emboîtées les unes dans les autres et qui sont pliées par rapport à la plaque de base (4), à partir du plan de base (E) de celle-ci, suivant différents angles (α, β).
